# EUROPEAN PATENT SPECIFICATION

(11) **EP 1 545 763 B1**
(45) Date of publication and mention of the grant of the patent: **19.03.2008**
(21) Application number: 03748338.5
(22) Date of filing: 25.09.2003
(51) Int. Cl.: B01J 19/00, G01N 35/02, G01N 35/10, B01L 3/02

(54) **METHOD AND APPARATUS FOR SUBSTRATE HANDLING AND PRINTING**
VERFAHREN UND VORRICHTUNG ZUM BEHANDELN UND ZUM BEDRUCKEN VON SUBSTRATEN
PROCEDE ET APPAREIL DE MANIPULATION ET D'IMPRESSION DE SUBSTRAT

(30) Priority: 27.09.2002 GB 0222397
(43) Date of publication of application: 29.06.2005
(73) Proprietor: Arrayjet Limited, Mayfield, Edinburgh EH22 5TA (GB)
(72) Inventor: MANNING, Howard, John, Edinburgh EH9 2DB (GB)
(74) Representative: Kennedy, David Anthony
(86) International application number: PCT/GB2003/004166
(87) International publication number: WO 2004/028683

(56) References cited:
- EP-A- 0 799 710
- WO-A-02/18053
- DE-A- 4 310 169
- US-A- 4 861 554
- US-A- 5 231 029
- US-A- 6 132 685
- US-A- 6 148 878
- US-A1- 2002 064 482
- PATENT ABSTRACTS OF JAPAN vol. 1996, no. 12, 26 December 1996 (1996-12-26) -& JP 08 201394 A (TSUKIOKA YASUNOBU), 9 August 1996 (1996-08-09)

## Description

The present invention relates to the field of printing, and in particular to the printing of large number of substrates.

Ink jet printheads can be used to position spots of liquids, for example biological samples, on substrates such as glass slides. An important application-of this technique is the manufacture of DNA microarrays.

When manufacturing a microarray, it is normally required to print one, two, three or more spots of each liquid onto each of a large number (tens to hundreds) of substrates. Typically, there will be a very large number (hundreds to tens of thousands) of different liquids to be printed onto the substrates, so the printing process may be lengthy.

The cleaning of the printhead before the introduction of the next set of liquids takes time, and therefore the once a set of liquids has been introduced into the printhead, they should be printed onto all the slides before another set of liquids is loaded.

Patent application WO 02/11889 discloses a method whereby an ink jet printhead having multiple chambers, each associated with a nozzle, can be used to print multiple different liquids at the same time. The printing can be carried out without cross-contamination between the liquids, despite the fact that the chambers are connected by one or more manifolds internal to the printhead. The liquids are introduced via contiguous groups of nozzles into the associated chambers and printed before they have time to mix by diffusion. Handling multiple liquids therefore offers the possibility of reducing the time taken to do the considerable amount of printing required in the production of DNA microarrays.

However, if a large number of slides is to be printed, their area is too large to allow them to be arranged in a plane for easy access during printing. It is therefore only practical to arrange smaller groups of the slides for printing. Since the slides do not occupy much volume, it is convenient to store the slides in a multilayer stack. However, the transfer into and out of storage inevitably occupies some time, conflicting with the need to minimise manufacturing time.

It would therefore be desirable to provide a method and apparatus for handling and printing substrates that obviated or at least mitigated some of the drawbacks of conventional systems.

It is one aim of an aspect of the invention to provide a method for loading and unloading substrates to printing apparatus in an efficient and rapid-manner.

It is a second aim of an aspect of the invention to provide apparatus for loading and unloading substrates to printing apparatus in an efficient and rapid manner.

Further aims and objects of the invention will become apparent from a reading of the description.

According to a first aspect of the invention, there is provided apparatus for transferring substrates to and from a printer, comprising:
- a first storage unit for storing substrates prior to a printing operation, the first storage unit having a plurality of vertically stacked substrate supports;
- a platen for receiving a substrate from said first storage unit, aligning the substrate with a printhead prior to a printing operation, and displacing the substrate subsequent to a printing operation to an unloading position;
- a second storage unit for storing substrates subsequent to said printing operation, the second storage unit having a plurality of vertically stacked substrate supports;
- wherein the first and second storage units are movable vertically with respect to the platen, and in use, relative vertical movement of the first storage unit and the platen transfers a substrate from the supports of the first storage unit to the platen, and relative vertical movement of the second storage unit and the platen transfers a substrate from the platen to the supports of the second storage unit.

Preferably, the vertically stacked substrate supports of the first and second storage units are arranged to support substrate-handling trays for holding a plurality of substrates.

Preferably, the platen receives a substrate-handling tray from the first storage unit, the substrate being held on said substrate handling tray.

The substrate handling tray may extend lengthways across the width of the platen, the length of the tray being greater than the width of the platen.

Preferably, the first and second storage units are frames defining an interior cavity, into which the platen extends.

According to a second aspect of the invention, there is provided a method for printing substrates on a platen, the method comprising the steps of:
- printing a first substrate by imparting linear movement to the printhead, thereby causing the printhead to traverse the substrate in a first direction, whilst simultaneously transferring a second substrate to the platen from a substrate storage unit;
- aligning the second substrate with the printhead, whilst reversing the direction of motion of the printhead;
- printing the second substrate by imparting linear movement to the printhead, thereby causing the printhead to traverse the substrate in a second direction opposite to the first.

Preferably, the transfer of a substrate between the platen and the substrate storage unit is carried out by imparting relative vertical movement between a substrate storage unit and the platen, the storage unit having a plurality of vertically stacked substrate supports.

Preferably, the steps of the method are repeated.

There will now be described, by way of example only, various embodiments of the invention with reference to the following drawings, of which:
Figure 1 is a plan view of apparatus according to an embodiment of the invention;
Figure 2 is a front view of the apparatus of Figure 1;
Figure 3 is a side view of the apparatus of Figure 1;
Figure 4 shows a side view of the apparatus and a table useful for explaining a method in accordance with an embodiment of the invention;
Figure 5 shows a table useful for explaining a method in accordance with an alternative embodiment of the invention.

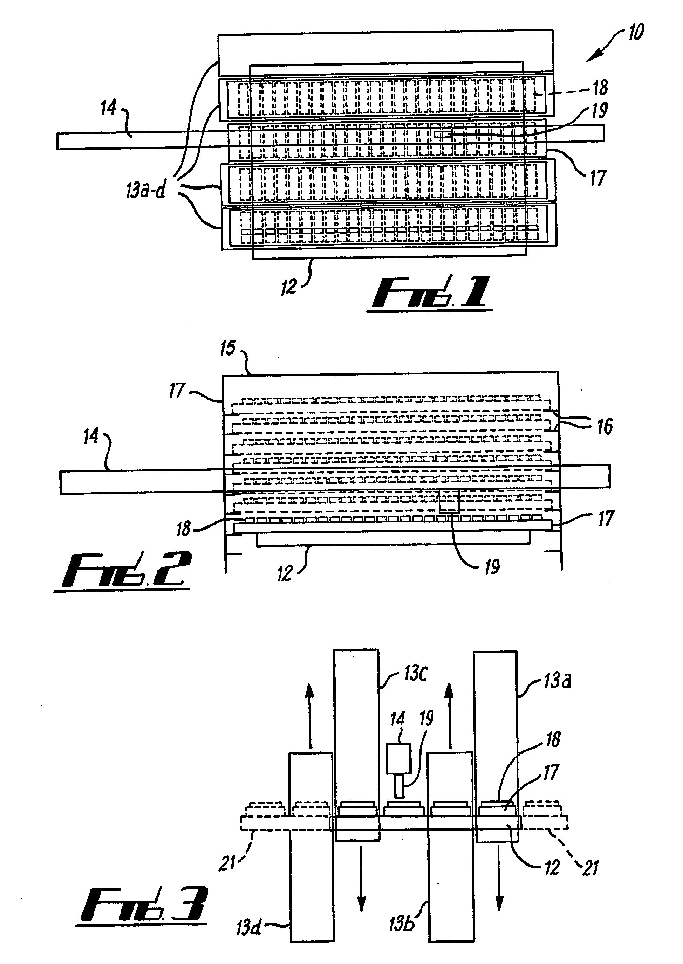

Referring firstly to Figures 1 and 2, the apparatus generally depicted at 10 includes a platen 12, four cages 13a to 13d, and a linear rail 14. Each cage is a rectangular metal frame 15 having a series of vertically stacked substrate supports in the form of inwardly protruding ledges 16. The cages are shaped to receive a number of slide trays 17, each slide tray holding a linear array of slides to be printed. Each slide tray 17 is oriented lengthways across the width of the platen 12, and the length of the trays is greater than the width of the platen. The platen 12 is therefore able to extend into a central cavity defined by the frame of the cage.

The platen 12 has four positions for receiving slide trays. Above one of the positions is a linear rail 14 along which the printhead 19 can be moved in a reciprocating motion following a trapezoidal velocity profile. The acceleration and deceleration associated with the changing of direction of the printhead at each end occurs beyond the end of the trays. The printhead axis is positioned with two cages 13 on either side. A suitable printhead is the XaarJet XJ126R.

The arrangement for the slides within a tray is a linear array of, say, twenty five slides 18 with their short edges parallel to the long axis of the trays and the long edges of adjacent slides facing one another. This minimises the time occupied travelling over each slide. A convenient pitch for the slides is 27 mm, which allows space for mechanisms to hold the slides, and fits in with the possibility of using two or more printheads. A printhead such as the XaarJet XJ126R can be set at a pitch of 54 mm, which works well with the 9 mm pitch of the well-plates from which the liquids are usually obtained.

As shown in Figure 2 ledges 16 of the cages above the platen 12 are filled with trays 17 (all but one shown in dotted lines for clarity), while the ledges below are empty. The cage is shown in a position where it has moved downwards, so that the tray is brought into contact with the platen. A slight further downward movement of the cage causes the tray to come to rest on the platen, freeing the trays from the ledges of the cage on which it was resting and depositing it onto the platen. A subsequent fore-aft movement of the platen will carry the tray to a position outside the frame of the cage.

Figure 3 shows the four cages 13a to 13d from a side view. Cages 13a and 13c are loaded with slide trays (not shown), and are positioned above the platen. In use, these upper cages will descend in stages from the high positions, depositing trays onto the platen in readiness for printing. In contrast, cages 13b and 13d are empty of trays, and are initially located in low positions below the platen. Cages 13b and 13d ascend from these low positions, unloading trays from the platen after printing.

The platen 12 is shown in one of its four possible positions, in which it spans four of seven equally sized regions of space. The other positions are shown by dotted lines 21. The two extreme positions are outside of the boundary of the cages 13.

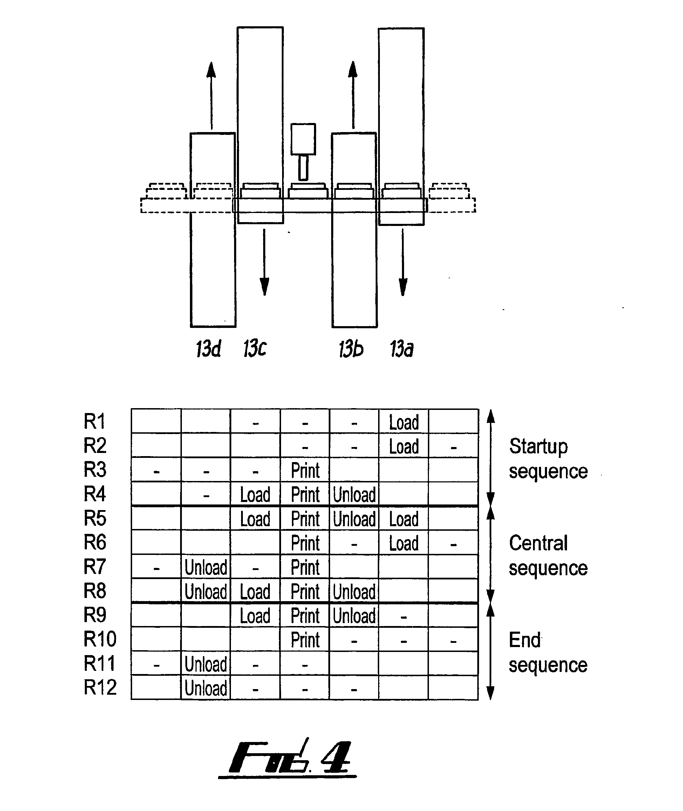

The operation of the apparatus will now be described with reference to Figure 4. The Figure shows the apparatus from a side view, and a table useful for understanding the handling and printing process.

Each row of the table represents a different time interval during the process. Time passes from the top of the table to the bottom. The first four rows represent a start-up sequence for loading and printing the first trays, and the bottom four rows represent an end sequence for dealing with the last trays. The middle four rows are repeated for as many iterations as is necessary for printing the entire batch of slides.

Each column of the table corresponds to a possible position of the platen. The platen occupies four adjacent positions within the seven. The actual position of the platen at any time is indicated by the shaded portions of the table.

The apparatus is initially set up as follows: the two cages 13a, 13c are in their uppermost positions, fully occupied by trays of slides; cages 13b, 13d are in their lowest positions, empty. The platen is initially empty.

First a startup sequence is performed, as represented by rows R1 to R4 of Figure 4:

The platen is positioned as illustrated, occupying the third to sixth of the seven regions (counting from the left). The first tray is loaded onto the platen by a downward movement of the right-most cage, cage 13a. As described above, the downward movement of the cage causes the tray to come to rest on the platen, freeing the tray from the ledges of cage 13a and depositing it onto the platen. This action is represented by the word. 'load' in the table, underneath the cage in question.

The platen then moves one pitch to the right placing the tray outside the frame and ledges of cage 13a. A second tray is loaded by cage 13a to a platen position adjacent to the first tray.

The platen then moves three pitches to the left, so that it occupies the first to fourth positions. Next, the printhead performs its first movement, printing the slides located on the first tray (now located under the printhead rail). This action is represented by the word 'print' underneath the printhead in the table of Figure 4 at row R3.

When the printhead has passed the end of the slide tray, the printhead slows down and changes direction. While the printhead is turning round, the platen moves one pitch to the right. The printhead now prints the second of the trays, while moving in the reverse direction. Simultaneously, while the printhead is moving but the platen is stationary, the cage 13c loads a third tray. At the same time, cage 13b unloads the first tray that was printed. This unloading action is effectively the reverse of the loading action. The cage 13c surrounds the tray as it rests on the platen, and the ledges are located underneath the ends of the tray. The cage 13b moves upwards, so that the ledges are brought into contact with the tray, and then lift the tray from the platen. This unloading action is represented in the table of Figure 4 is 'unload'.

The platen moves one pitch to the right, completing the start-up sequence, and the system enters a central sequence that is repeated as often as is appropriate for the number of trays in the machine.

The central sequence follows the same principle. Cages 13 load and unload trays during printing and when the platen 12 is stationary. The platen moves while the printhead is reversing direction. The central sequence shown, consists of four stages, represented by rows R5 to R8. The apparatus first loads two trays from cages 13a and 13c, unloads one tray onto cage 13b, and prints the tray that is aligned with the printhead. The following two steps respectively involve a print operation and the loading of a new tray from cage 13a, and print operation and an unloading action onto cage 13d. The central sequence therefore prints four trays in four traverses of the printhead. That is, the printhead is busy at every step of the process. The central sequence is repeated as many times as necessary, until the cages 13a and 13c are almost empty of trays.

Rows R9 to R12 represent an end sequence for handling the remaining trays on the platen 12. At R9, the final tray is loaded onto the platen from cage 13c, the penultimate tray is printed, and a tray is unloaded onto cage 13b. The next steps involves the printing of the final tray, and the subsequent unloading of the trays onto cage 13d.

The whole of the above-described operation consists of a start-up sequence, a number n of repeats of the four-stage central sequence, and an end sequence. The operation results in the printing of a set of liquids held within the printhead onto all 4(n+1) trays of slides in the machine. At the end of this operation the trays have been transferred, with reversal of order, from the two loading cages 13a, 13c to the two unloading cages 13b, 13d. Cages 13a, 13c were initially in a raised position, but have now descended below the platen, emptying of trays. Cages 13b, 13d, initially below the platen, have ascended filling with trays.

It is notable that only four out of a total of 4(n+2) operations do not involve printing, so the printhead is kept busy with great efficiency, particularly if n is substantial.

When the next set of liquids has been acquired by the printhead, the entire operation is applied in reverse, printing the new set of liquids onto slightly different positions on all the trays of slides. The load cages 13a, 13c, which were moving downwards, have now become unload cages moving upwards, and vice versa. The scheme illustrated in the table of Figure 4 has the highly desirable property that every tray is printed with the printhead travelling in the same direction as with the previous set of liquids. This minimises errors due to the time of flight of the drops, as the shifts will in the same direction for all liquids printed onto a given slide. At the end of two complete operations, two sets of liquids have been printed onto all of the slides, and all the cages and trays are back in their original positions.

Multiple sets of liquids are printed using the same overall operation, alternately in the order given in Figure 4 and in reverse. The positions on the slides of the sets of spots are shifted in the direction of printhead motion by applying different offsets to the triggering electronics each time the printhead performs a series of traverses. After a number of operations, the slides have been filled with spots along the line of travel of the printhead. During the next few operations, the four positions visited by the platen, while still equally spaced at the same pitch, are shifted slightly relative to the previous ones. This causes another row of spots to be printed on the slides. It is necessary for the entire assembly of four cages to occupy a slightly different position for each row of spots. As printing of a large number of liquids proceeds, multiple rows of spots are produced on the slides. Their spacing in the direction of printhead travel is controlled by the timing of printhead triggering, and the spacing perpendicular to printhead motion is determined by the shifts in platen positions. Accuracy of spot positioning is guaranteed by the accuracy of these two motions and by the mechanism whereby trays stored on inaccurately manufactured cages are located precisely on the platen as they are loaded.

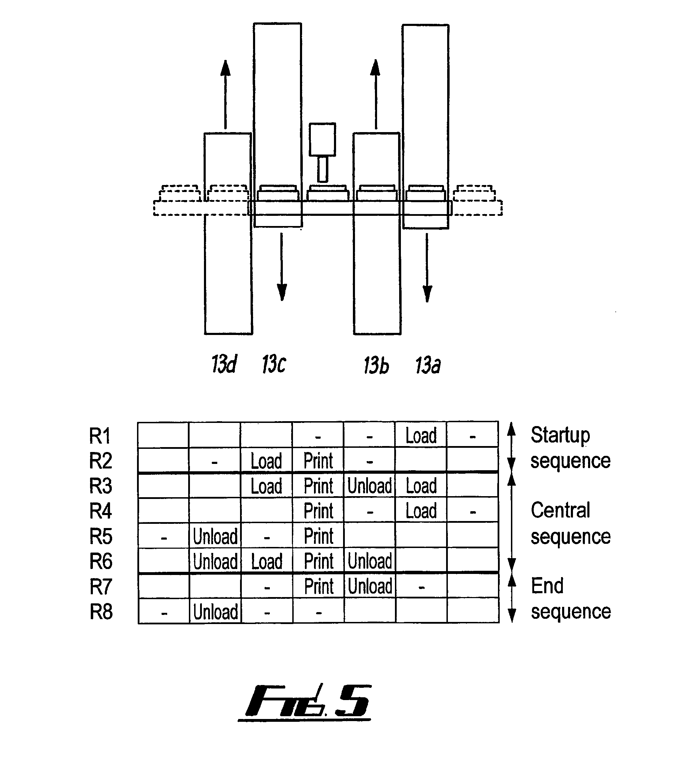

The sequence in the table of Figure 4 prints 4(n+1) trays of slides. If the number of trays to be printed is even but not divisible by four, i.e. 4n+2, the sequence shown in the table of Figure 5 can be used. This sequence appears to be slightly more efficient than that in the table of Figure 4, in that one fewer stage is required at start-up and at the end. However, as explained above, it is highly desirable to guarantee that individual slides are always printed with printhead motion in the same direction. The sequence of Figure 5 will require an extra traverse by the printhead at the outset, and at the end in order for the printhead motion to be consistent.

It is possible to extend these schemes to handle an odd number of trays or to handle the situation where the last tray is not filled with slides. Thus, any number of slides can be handled, not just a multiple of fifty.

Other schemes are possible, involving cages which load more than one tray at a time onto the platen; using two or more than four cages; using cages to store both unprinted and printed trays.

A practical convenience of the proposed four-cage system is that at the outset the two cages closest to the front of the machine can be loaded with trays, and the platen used to transfer the contents of one of them to the rear of the machine as required to start the sequences of Figure 4.

The present invention provides an efficient means of printing a large number of substrates, by providing a rapid means of storing, retrieving, printing and restoring slides.

The arrangement reduces the requirement for reloading the printhead with different liquids. The liquids are valuable and available in small quantities only. The loading of liquids into the printhead is inevitably wasteful in that only a proportion of each liquid is usefully printed. Ink jet printheads produce very small drops, so once liquids are introduced into the printhead, it can print a very large number of spots. The present invention utilises this characteristic of the printheads effectively.

A further advantage of the invention arises from reciprocating the printhead motion using a one-dimensional transport, and mounting multiple trays on a platen which is capable of movement at right-angles to the printhead motion. The printhead traverses to print the tray which is in the appropriate position on the (stationary) platen; then the platen moves laterally while the printhead is turning round at the end of its stroke, bringing another tray of slides into position underneath the axis of printhead motion. By the time the next printhead stroke takes place, the platen is again stationary. Accurate spot positioning is achieved in the direction of printhead travel by timing of the drop ejection, as disclosed in patent application WO 02/11889, and in the perpendicular direction by precise positioning of the platen.

The invention therefore minimises the time during which the printhead is not printing.

An additional advantage of this approach is that larger numbers of trays can be printed than those which fit on the platen: one or more cages can be used to store the trays when they are not being printed, to feed them onto the platen for printing and to remove them afterwards. A number of trays can be stored above each other on shelves in each cage; one or more cages can be moved vertically downwards so as to deposit the trays in turn onto the platen in preparation for printing. One or more other cages, moving vertically upwards, can remove them afterwards. The cages can perform these functions while the platen is stationary, during the printing stroke of the printhead. Thus the loading of trays onto the platen and unloading from it need not add to the time taken to print the overall number of slides in the machine; this scheme is equivalent in speed to a system using an impracticably large platen to hold all the trays.

A further advantage of this approach is that the cages and their motion need not be precise: if the trays are equipped with location features which engage with matching features on the platen, the act of loading each tray onto the platen ensures its accurate positioning with respect to the platen. The only parameters that need to be accurate are the printhead mounting, its motion, the platen's location features and its motion. Both of these motions are one-dimensional.

It will be evident to the' skilled reader that various changes could be made to the above-described embodiments within the scope of the invention as claimed. For example, different numbers of loading and unloading cages could be employed. In addition, one cage could unload trays, and could reload the same trays from the platen after printing. A further arrangement may utilise two cages that simultaneously unload or load two trays at different positions on the platen.

## Claims

1. Apparatus (10) for transferring substrates to and from a printer, comprising:
- a first storage unit (13a) for storing substrates (18) prior to a printing operation, the first storage unit having a plurality of vertically stacked substrate supports (16);
- a platen (12) for receiving a substrate from said first storage unit, aligning the substrate with a printhead (19) prior to a printing operation, and displacing the substrate subsequent to a printing operation to an unloading position;
- a second storage unit (13b) for storing substrates subsequent to said printing operation, the second storage unit having a plurality of vertically stacked substrate supports;
- wherein the first and second storage units are moveable vertically with respect to the platen, and in use, relative vertical movement of the first storage unit and the platen transfers a substrate from the supports of the first storage unit to the platen, and relative vertical movement of the second storage unit and the platen transfers a substrate from the platen to the supports of the second storage unit.

2. Apparatus as claimed in Claim 1, ***characterised in* that** the vertically stacked substrate supports of the first and second storage units are arranged to support substrate trays (17) for holding a plurality of substrates.

3. Apparatus as claimed in Claim 2, ***characterised in* that** the platen receives a substrate tray from the first storage unit, the substrate being held on said substrate tray.

4. Apparatus as claimed in Claim 2 or Claim 3, ***characterised in that*** a substrate tray extends lengthways across the width of the platen, the length of the tray being greater than the width of the platen.

5. Apparatus as Claimed in any preceding Claim, ***characterised in that*** the first and second storage units comprise frames (15) defining an interior cavity, into which the platen extends.

6. Apparatus as claimed in any preceding Claim, ***characterised in that*** the apparatus further comprises third and fourth storage units (13c, 13d) movable vertically relative to the platen.

7. Apparatus as claimed in Claim 6, ***characterised in* that** two of said storage units are arranged on a first side of the printhead, and two of said storage units are arranged on the opposing side of the printhead.

8. A method for printing substrates on a platen (12), the method comprising the steps of :
- printing a first substrate (18) by imparting linear movement to the printhead (19), thereby causing the printhead to traverse the substrate in a first direction, whilst simultaneously transferring a second substrate to the platen from a substrate storage unit;
- aligning the second substrate with the printhead whilst reversing the direction of motion of the printhead;
- printing the second substrate by imparting linear movement to the printhead, thereby causing the printhead to traverse the second substrate in a second direction opposite to the first.

9. A method as claimed in Claim 8, ***characterised in* that** the substrates are aligned by imparting relative lateral movement between the platen and the printhead.

10. A method as claimed in Claim 8 or Claim 9, ***characterised* in that** the step of aligning the second substrate with the printhead also aligns the first substrate with a substrate storage unit.

11. A method as claimed in any of Claims 8 to 10 ***characterised by*** the additional step of transferring the first substrate from the platen to a substrate storage unit.

12. A method as claimed in Claim 11, ***characterised in* that** the step of transferring the first substrate from the platen to a substrate storage unit is carried out simultaneously with the printing of the second substrate.

13. A method as claimed in Claims 11 or 12, ***characterised* in that** the transfer of a substrate between the platen and the substrate storage unit is carried out by imparting relative vertical movement between a substrate storage unit and the platen.

14. A method as claimed in any of Claims 8 to 13, **characterised in that** the substrates are mounted on substrate trays (17).

15. A method as claimed in Claim 14, ***characterised in* that** the first substrate is one of a set of substrates mounted on a first substrate tray, and the second or further substrate is one of a set of substrates mounted on a second substrate tray.

16. A method as claimed in Claim 14 or 15, **characterised *in* that** the transfer of substrates to or from the platen is by transfer of substrate trays to or from the platen.

17. A method as claimed in any preceding Claim, **characterised in *that*** the steps of the method are repeated for third and additional substrates or substrate trays.

## Patentansprüche

1. Vorrichtung (10) dient der Überführung der Bedruckstoffe an einen bzw. von einem Drucker und umfasst:
- eine erste Lagereinheit (13a) zur Lagerung von Bedruckstoffen (18) vor dem Druckvorgang; die erste Lagereinheit weist mehrere vertikal geschichtete Halterungen für die Bedruckstoffe auf (16);
- eine Druckplatte (12), die den Bedruckstoff von besagter erster Lagereinheit erhält, den Bedruckstoff vor dem Druckvorgang auf den Druckkopf (19) ausrichtet und ihn im Anschluss an den Druckvorgang zu einer Entladeposition befördert;
- eine zweite Lagereinheit (13b) zur Lagerung von Bedruckstoffen im Anschluss an den Druckvorgang; die zweite Lagereinheit weist mehrere vertikal geschichtete Halterungen für die Bedruckstoffe auf;
- worin die erste und zweite Lagereinheit in Bezug auf die Druckplatte vertikal beweglich sind und, bei laufendem Betrieb, die jeweilige vertikale Bewegung der ersten Lagereinheit und der Druckplatte einen Bedruckstoff von den Halterungen der ersten Lagereinheit zur Druckplatte überführt, und die jeweilige vertikale Bewegung der zweiten Lagereinheit und der Druckplatte einen Bedruckstoff von der Druckplatte zu den Halterungen der zweiten Lagereinheit überführt.

2. Vorrichtung nach Anspruch 1, **dadurch gekennzeichnet, dass** die vertikal geschichteten Bedruckstoffhalterungen der ersten und zweiten Lagereinheit so eingerichtet sind, dass sie die Bedruckstofffächer (17) für die Aufnahme einer Vielzahl von Bedruckstoffen unterstützen.

3. Vorrichtung nach Anspruch 2, **dadurch gekennzeichnet, dass** die Druckplatte ein Bedruckstofffach von der ersten Lagereinheit erhält, wobei der Bedruckstoff von besagtem Bedruckstofffach gehalten wird.

4. Vorrichtung nach Anspruch 2 oder Anspruch 3, **dadurch gekennzeichnet, dass** ein Bedruckstofffach in der Längsrichtung über die Breitseite der Druckplatte hinausragt; die Längsseite des Faches ist nämlich größer als die Breitseite der Druckplatte.

5. Vorrichtung nach allen vorherigen Ansprüchen, **dadurch gekennzeichnet, dass** die erste und zweite Lagereinheit Rahmen (15) aufweisen, die einen innen liegenden Hohlraum) beschreiben, in den die Druckplatte hineinragt.

6. Vorrichtung nach allen vorherigen Ansprüchen, **dadurch gekennzeichnet, dass** die Vorrichtung weiterhin eine dritte und vierte Lagereinheit (13c, 13d) aufweist, die im Verhältnis zur Druckplatte vertikal beweglich sind.

7. Vorrichtung nach Anspruch 6, **dadurch gekennzeichnet, dass** zwei der besagten Lagereinheiten auf einer Seite des Druckkopfes angeordnet sind und zwei der besagten Lagereinheiten auf der gegenüberliegenden Seite des Druckkopfes angeordnet sind.

8. Eine Methode zum Bedrucken von Bedruckstoffen auf der Druckplatte (12). Die Methode umfasst folgende Schritte:
- Bedrucken eines ersten Bedruckstoffes (18) durch Übermittlung einer linearen Bewegung an den Druckkopf (19), wodurch der Druckkopf veranlasst wird, den Bedruckstoff in einer ersten Richtung zu überfahren, während ein zweiter Bedruckstoff von einer Lagereinheit an die Druckplatte überführt wird;
- Ausrichtung des zweiten Bedruckstoffes auf den Druckkopf während gleichzeitig die Bewegungsrichtung des Druckkopfes geändert wird;
- Bedrucken des zweiten Bedruckstoffes durch Übermittlung einer linearen Bewegung an den Druckkopf, wodurch der Druckkopf veranlasst wird, den zweiten Bedruckstoff in einer Richtung zu überfahren, die der ersten entgegen gesetzt ist.

9. Methode nach Anspruch 8, **dadurch gekennzeichnet, dass** die Bedruckstoffe durch Übermittlung einer relativen Seitwärtsbewegung zwischen der Druckplatte und dem Druckkopf ausgerichtet werden.

10. Methode nach Anspruch 8 oder Anspruch 9, **dadurch gekennzeichnet, dass** der Schritt, durch den der zweite Bedruckstoff auf den Druckkopf ausgerichtet wird, zugleich den ersten Bedruckstoff auf die Bedruckstofflagereinheit ausrichtet.

11. Methode nach Ansprüchen 8 bis 10, **dadurch gekennzeichnet, dass** in einem zusätzlichen Schritt der erste Bedruckstoff von der Druckplatte an die Bedruckstofflagereinheit überführt wird.

12. Methode nach Anspruch 11, **dadurch gekennzeichnet, dass** der Schritt, in dem der erste Bedruckstoff von der Druckplatte an die Bedruckstofflagereinheit überführt wird, gleichzeitig mit dem Bedrucken des zweiten Bedruckstoffes ausgeführt wird.

13. Methode nach Anspruch 11 oder Anspruch 12, **dadurch gekennzeichnet, dass** die Überführung eines Bedruckstoffes von der Druckplatte zur Bedruckstofflagereinheit durch Übermittlung einer relativen Vertikalbewegung zwischen der Bedruckstofflagereinheit und der Druckplatte ausgeführt wird.

14. Methode nach Ansprüchen 8 bis 13, **dadurch gekennzeichnet, dass** die Bedruckstoffe auf den Bedruckstofffächern (17) angebracht werden.

15. Methode nach Anspruch 14, **dadurch gekennzeichnet, dass** der erste Bedruckstoff Teil einer Menge von Bedruckstoffen ist, die auf einem ersten Bedruckstofffach angebracht wird, und der zweite oder weitere Bedruckstoff Teil einer Menge ist, die auf einem weiteren Bedruckstofffach angebracht wird.

16. Methode nach Anspruch 14 oder Anspruch 15, **dadurch gekennzeichnet, dass** die Überführung der Bedruckstoffe an die bzw. von der Druckplatte durch die Überführung der Bedruckstofffächer an die bzw. von der Druckplatte geschieht.

17. Methode nach allen vorherigen Ansprüchen, **dadurch gekennzeichnet, dass** die verschiedenen Methodenschritte bei dritten und weiteren Bedruckstoffen und Bedruckstofffächem wiederholt werden.

## Revendications

1. Appareil (10) assurant le transfert de substrats de et vers une imprimante, comprenant :
- une première unité de stockage (13a) servant au stockage des substrats (18) avant une opération d'impression, la première unité de stockage ayant une pluralité de supports de substrats empilés verticalement (16) ;
- une platine (12) prévue pour recevoir un substrat de ladite première unité de stockage, alignant le substrat avec la tête d'impression (19) avant une opération d'impression, et déplaçant le substrat après une opération d'impression jusqu'à une position de déchargement ;
- une deuxième unité de stockage (13b) pour stocker des substrats après ladite opération d'impression, la deuxième unité de stockage ayant une pluralité de supports de substrats empilés verticalement ;
- les première et deuxième unités de stockage pouvant être déplacées sur le plan vertical par rapport à la platine, et pendant l'utilisation, le mouvement vertical relatif de la première unité de stockage et la platine transfère un substrat des supports de la première unité de stockage à la platine, et le mouvement vertical relatif de la deuxième unité de stockage et la platine transfère un substrat de la platine aux supports de la deuxième unité de stockage.

2. Appareil selon la revendication 1, ***caractérisé en ce que*** les supports de substrats empilés verticalement des première et deuxième unités de stockage sont agencés pour supporter des plateaux de substrats (17) contenant une pluralité de substrats.

3. Appareil selon la revendication 2, ***caractérisé en ce que*** la platine reçoit un plateau de substrats de la première unité de stockage, le substrat étant maintenu sur ledit plateau de substrats.

4. Appareil selon la revendication 2 ou 3, ***caractérisé en ce qu*'**un plateau de substrats s'étend longitudinalement sur la largeur de la platine, la longueur du plateau étant supérieure à la largeur de la platine.

5. Appareil selon l'une quelconque des revendications précédentes, ***caractérisé en ce que*** les première et deuxième unités de stockage comprennent des cadres (15) définissant une cavité intérieure, dans laquelle la platine s'étend.

6. Appareil selon l'une quelconque des revendications précédentes, ***caractérisé en ce que*** l'appareil comprend une troisième et une quatrième unité de stockage (13c, 13d) pouvant se déplacer sur le plan vertical par rapport à la platine.

7. Appareil selon la revendication 6, ***caractérisé en ce que*** deux des unités de stockage sont agencées sur un premier côté de la tête d'impression, et deux des dites unités de stockage sont agencées de l'autre côté de la tête d'impression.

8. Procédé d'impression de substrats sur une platine (12), le procédé comprenant les étapes consistant à :
- imprimer un substrat (18) en communiquant un mouvement linéaire à la tête d'impression (19), de telle sorte que la tête d'impression traverse le substrat dans une première direction, tout en transférant simultanément un deuxième substrat sur la platine à partir d'une unité de stockage de substrats;
- aligner le deuxième substrat avec la tête d'impression tout en inversant le sens de déplacement de la tête d'impression ;
- imprimer le deuxième substrat en communiquant un mouvement linéaire à la tête d'impression, de telle sorte que la tête d'impression traverse le deuxième substrat dans une deuxième direction opposée à la première.

9. Procédé selon la revendication 8, ***caractérisé en ce que*** les substrats sont alignés en communiquant un mouvement latéral relatif entre la platine et la tête d'impression.

10. Procédé selon la revendication 8 ou 9, ***caractérisé en ce que*** l'étape consistant à aligner le deuxième substrat sur la tête d'impression aligne également le premier substrat avec l'unité de stockage de substrats.

11. Procédé selon les revendications 8 à 10, ***caractérisé par*** l'étape supplémentaire consistant à transférer le premier substrat de la platine à une unité de stockage de substrats.

12. Procédé selon la revendication 11, ***caractérisé en ce que*** l'étape consistant à transférer le premier substrat de la platine à une unité de stockage de substrats est exécutée en même temps que l'impression du deuxième substrat.

13. Procédé selon la revendication 11 ou 12, ***caractérisé en ce que*** le transfert d'un substrat entre la platine et l'unité de stockage de substrats est assuré en communiquant un mouvement vertical relatif entre une unité de stockage de substrats et la platine.

14. Procédé selon l'une quelconque des revendications 8 à 13, ***caractérisé en ce que*** les substrats sont montés sur des plateaux de substrats (17).

15. Procédé selon la revendication 14, ***caractérisé en ce que*** le premier substrat est l'un d'un jeu de substrats monté sur un premier plateau de substrats, et le deuxième ou le substrat suivant est l'un d'un jeu de substrats monté sur un deuxième plateau de substrats.

16. Procédé selon la revendication 14 ou 15, ***caractérisé en ce que*** le transfert des substrats sur ou de la platine est assuré par le transfert de plateaux de substrats sur ou de la platine.

17. Procédé selon l'une quelconque des revendications précédentes, ***caractérisé en ce que*** les étapes du procédé sont répétées pour le troisième substrat ou plateau de substrats et les suivants.
